# EUROPEAN PATENT APPLICATION

(11) **EP 4 636 897 A1**
(43) Date of publication of application: **22.10.2025**
(21) Application number: 24891722.1
(22) Date of filing: 08.11.2024
(51) Int. Cl.: H01M 10/0585, H01M 10/0562, H01M 4/134, H01M 50/105, H01M 10/04

(54) **ALL-SOLID-STATE BATTERY AND METHOD FOR MANUFACTURING SAME**

(30) Priority: 15.11.2023 KR 20230157932
(71) Applicant: LG Energy Solution, Ltd., Seoul 07335 (KR)
(72) Inventor: CHA, Hyohyun, Daejeon 34122 (KR); KIM, Na Yoon, Daejeon 34122 (KR); KIM, Ji Young, Daejeon 34122 (KR); LEE, Daejin, Daejeon 34122 (KR); HWANG, Sunwoo, Daejeon 34122 (KR)
(74) Representative: Goddar, Heinz J.
(86) International application number: PCT/KR2024/017605
(87) International publication number: WO 2025/105776

(57) **Abstract**

The present disclosure relates to an all-solid-state battery and a method of manufacturing same. More specifically, an all-solid-state battery according to the present disclosure may have improved structural stability by ensuring that the shape and cross-section of the positive electrode layer, solid electrolyte layer, and negative electrode layer are identical in a unit cell in which the positive electrode layer, the solid electrolyte layer, and the negative electrode layer are stacked.

## Description

### [Technical Field]

### Cross-citation with Related Applications

This application claims the benefit of priority to Korean Patent Application No. 10-2023-0157932, filed November 15, 2023.

### Technical Field

The present disclosure relates to an all-solid-state battery and a method of manufacturing same.

### [Related Art]

A variety of batteries are being researched to overcome the limitations of current lithium secondary batteries in terms of capacity, safety, output, enlargement, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. It also has the advantage of being able to use Li metal or Li alloys as negative electrode materials, which can dramatically improve the energy density relative to the mass and volume of the battery.

However, in the cell assembly process of all-solid-state batteries, each electrode is stacked one on top of the other at the top of the pouch, but achieving precise alignment during this process remains a challenge. When stacking cells to improve energy density, these misaligned cells can create an unstable stack that can lead to cracks and shorts.

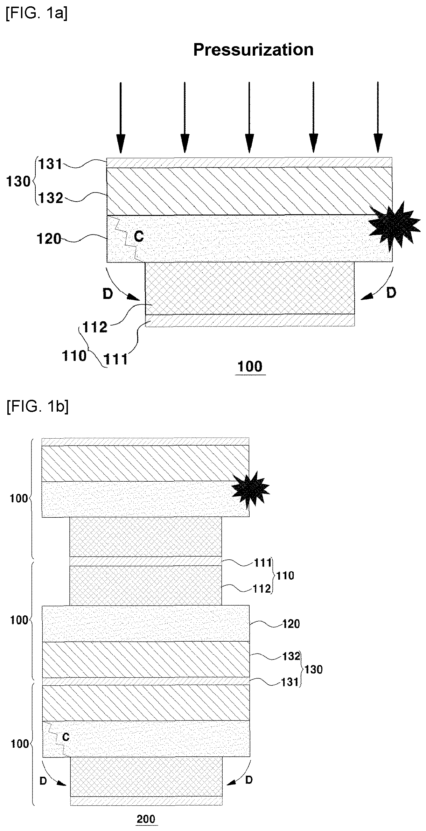

FIGs. 1a to 1c are schematic diagrams illustrating longitudinal sections of an all-solid-state battery according to the prior art (1a: longitudinal section of a unit cell, 1b: longitudinal section of a stacked cell, 1c: longitudinal section of a laminate comprising a positive electrode layer and a solid electrolyte layer).

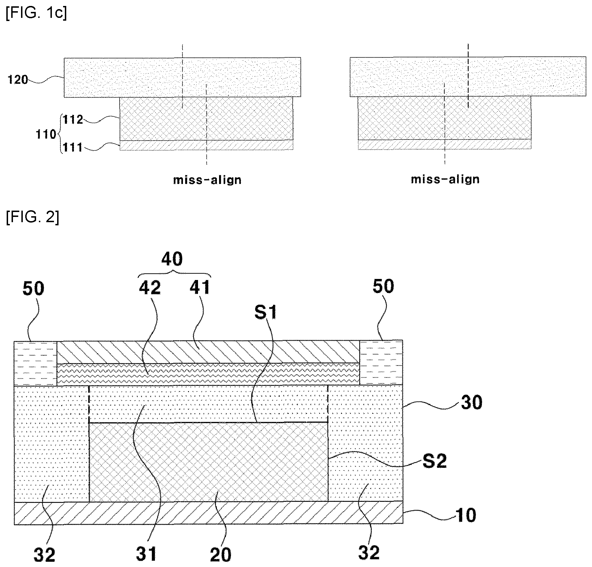

The unit cell (100) of an all-solid-state battery according to the prior art has a structure with a positive electrode current collector (111), a positive electrode active material layer (112), a solid electrolyte layer (120), and a negative electrode layer (130) stacked sequentially (FIG. 1a). The stacked cell (200) is formed by stacking a plurality of unit cells (100), such as two or more unit cells (100) stacked together (FIG. 1b). In manufacturing the unit cell (100), the area of the positive electrode layer (110) including the positive electrode current collector (111) and the positive electrode active material layer (112) is small compared to the adjacent solid electrolyte layer (120), so it is not easy to align the solid electrolyte layer (120) on the positive electrode layer (110), which may cause a miss-alignment (FIG. 1c). In general, the positive electrode layer is designed to be smaller than the solid electrolyte layer, which acts as a separator, because if the positive electrode layer stretches and touches the negative electrode layer, or if the two electrode layers meet due to a mis-alignment during assembly, a short will occur. Furthermore, after laminating the components as described above, cracks (C) may form in the solid electrolyte layer (120) due to the step difference in the area mismatch between the adjacent positive electrode active material layer (112) and the solid electrolyte layer (120) when pressurized, and contact between the positive electrode and negative electrode layer may occur if the laminated structure itself undergoes disintegration (D).

FIG. 2 is a structure of an all-solid-state battery disclosed in Korean Patent Publication No. 2022-0080930.

Referring to FIG. 2, it can be seen that a spacer (50) made of a polymer is provided in the space created by the area of the negative electrode layer (40) being smaller than the area of the solid electrolyte layer (30) to secure the structural stability of the all-solid-state battery. The spacer (50) is made of a polymer comprising at least one selected from the group consisting of polyethylene, polyethylene naphthalate, polyethylene terephthalate, and combinations thereof. Since the spacer (50) is made of a different material from the negative electrode layer, when pressure is applied in a pressurization process in the manufacture of an all-solid-state battery, even under the same pressure, while the negative electrode layer (40) remains undamaged, cracks or the like may occur in the spacer (50) and the solid electrolyte layer (30) under load. This phenomenon can be even more pronounced in stacked cells.

Therefore, for the high stability of all-solid-state batteries, it is necessary to develop technologies that can easily realize constant alignment and secure structural stability during cell assembly.

### [Prior Art Reference]

### [Patent Reference]

(Patent Reference 1) Korean Laid-open Patent Publication No. 2022-0080930

### [Detailed Description of the Invention]

### [Technical Problem]

The inventors of the present disclosure have conducted various studies to solve the above problems and have confirmed that, in an all-solid-state battery comprising a unit cell or a stacked cell in which a plurality of unit cells are stacked, the structural stability of the all-solid-state battery can be secured by forming a unit cell comprising a positive electrode layer, a solid electrolyte layer, and a negative electrode layer, while designing the shape and area of the cross-section of the positive electrode layer, the solid electrolyte layer, and the negative electrode layer to be the same.

Accordingly, it is an object of the present disclosure to provide an all-solid-state battery with structural stability and a manufacturing method thereof.

### [Technical Solution]

To accomplish the above objective, the present disclosure provides an all-solid-state battery comprising a unit cell,
wherein the unit cell comprises a positive electrode current collector;
a positive electrode active material layer contacting a specific area on one surface of the positive electrode current collector;
a solid electrolyte layer surrounding one surface of the positive electrode active material layer and the adjacent side surfaces, and formed to contact the positive electrode current collector; and
a negative electrode layer located on the solid electrolyte layer and having an area equal to the solid electrolyte layer.

In one example of the present disclosure, an all-solid-state battery is provided, wherein the area of the solid electrolyte layer is 1.3 to 1.8 times larger than the area of the positive electrode active material layer.

In one example of the present disclosure, an all-solid-state battery is provided, wherein the negative electrode layer comprises a negative electrode current collector; and a negative electrode active material layer formed on the negative electrode current collector, wherein the negative electrode active material layer may be laminated to contact the solid electrolyte layer.

In one example of the present disclosure, an all-solid-state battery is provided, wherein the negative electrode layer comprises a negative electrode current collector; and an anodeless coating layer formed on the negative electrode current collector, wherein the anodeless coating layer may be laminated to contact the solid electrolyte layer.

In one example of the present disclosure, an all-solid-state battery is provided, wherein two or more unit cells are stacked.

In one example of the invention, the present disclosure provides an all-solid-state battery, wherein the all-solid-state battery is a pouch-type.

The present disclosure provides a method of manufacturing an all-solid-state battery, comprising the steps of (S1) forming a specific area of a positive electrode active material layer on the positive electrode current collector;
(S2) forming, on the positive electrode active material layer, a solid electrolyte layer to surround one surface of the positive electrode active material layer and the adjacent side surfaces;
(S3) forming a negative electrode layer on the solid electrolyte layer, the area of which is equal to the area of the solid electrolyte layer; and
(S4) pressurizing and bonding the positive electrode current collector, positive electrode active material layer, solid electrolyte layer, and negative electrode layer in a stacked direction.

In one example of the present disclosure, there is provided a method of manufacturing an all-solid-state battery, wherein the pressure is 300 to 700 MPa.

### [Advantageous Effects]

The unit cell included in the all-solid-state battery of the present disclosure has a structure in which a positive electrode layer, a solid electrolyte layer, and a negative electrode layer are stacked sequentially, wherein the shape and cross-section of the positive electrode layer, solid electrolyte layer, and negative electrode layer are identical, resulting in structural stability, so that damage such as cracking and stretching can be prevented even in the process of pressurizing and bonding during manufacturing.

Furthermore, to improve the energy density, when two or more unit cells are stacked to form a stacked cell, the unit cells can also exhibit structural stability, which can exhibit excellent lifetime characteristics.

### [Brief Description of Drawing]

FIGs. 1a to 1c are schematic diagrams illustrating longitudinal sections of an all-solid-state battery according to the prior art (1a: longitudinal section of a unit cell, 1b: longitudinal section of a stacked cell, 1c: longitudinal section of a laminate comprising a positive electrode layer and a solid electrolyte layer).
FIG. 2 is a structure of an all-solid-state battery disclosed in Korean Patent Publication No. 2022-0080930.

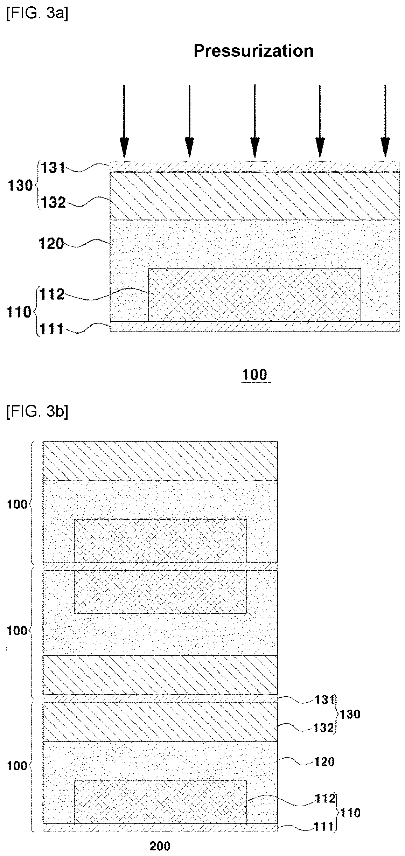

FIGs. 3a to 3c are schematic diagrams illustrating longitudinal sections of an all-solid-state battery according to the present disclosureembodiment (3a: longitudinal section of a unit cell, 3b: longitudinal section of a stacked cell, 3c: longitudinal section of a laminate comprising a positive electrode layer and a solid electrolyte layer).

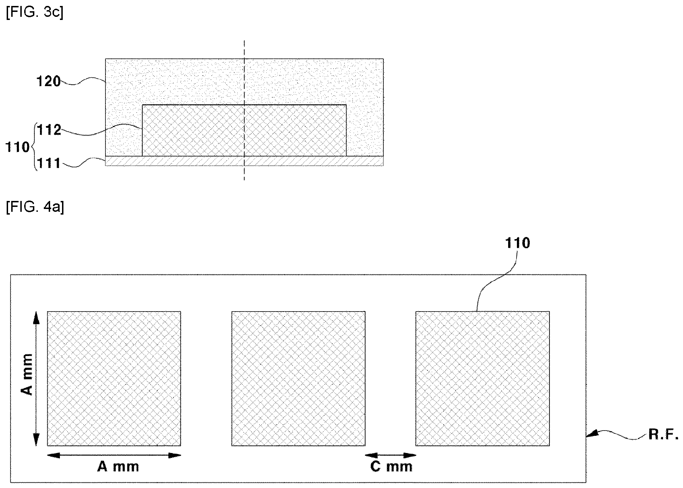

FIGs. 4a to 4d are schematic diagrams of a unit cell fabrication process according to a preferred example of the embodiment (4a: placement of positive electrodes, 4b: fabrication of a solid electrolyte layer, 4c: top and longitudinal views of the fabricated solid electrolyte layer, 4d: cutting of the laminate including positive electrode layer and solid electrolyte layer).

### [Best Mode]

Hereinafter, the present invention will be described in more detail to provide a better understanding.

The terms and words used in this specification and claims are not to be construed in their ordinary or dictionary sense, but rather in a sense and concept consistent with the technical idea of the present disclosure, based on the principle that the inventor may define the concept of a term as he/her sees fit to best describe his/her invention.

### All-solid-state Battery

The present disclosure relates to an all-solid-state battery.

An all-solid-state battery according to the present disclosure comprises a unit cell,
wherein the unit cell comprises a positive electrode current collector,
a positive electrode active material layer contacting a specific area on one surface of the positive electrode current collector;
a solid electrolyte layer surrounding one surface of the positive electrode active material layer and the adjacent side surfaces, and formed to contact the positive electrode current collector; and
a negative electrode layer located on the solid electrolyte layer and having an area equal to the solid electrolyte layer.

Since the all-solid-state battery according to the present disclosure does not contain any heterogeneous materials except for the positive electrode layer, solid electrolyte layer, and negative electrode layer, problems such as structural instability and cell performance degradation due to the addition of heterogeneous materials can be avoided.

Thus, the unit cell of the all-solid-state battery may comprise a positive electrode layer, a solid electrolyte layer, and a negative electrode layer.

FIGs. 3a to 3c are schematic diagrams illustrating longitudinal sections of a unit cell included in the all-solid-state battery according to the present disclosure (3a: longitudinal section of a unit cell, 3b: longitudinal section of a stacked cell, 3c: longitudinal section of a laminate comprising a positive electrode layer and a solid electrolyte layer).

Referring to FIGs. 3a to 3c, the unit cell (100) included in the all-solid-state battery has a structure with a positive electrode current collector (111), a positive electrode active material layer (112), a solid electrolyte layer (120), and a negative electrode layer (130) stacked sequentially.

The positive electrode active material layer (112) contacts one surface of the positive electrode current collector (111), but contacts a specific area of that surface. In the positive electrode active material layer (112), the other surface than one surface that contacts the positive electrode current collector (111), and the four side surfaces adjacent to the other surface are surrounded by a solid electrolyte layer (120). In the positive electrode active material layer (112), one surface that contacts the positive electrode current collector (111) is referred to as the first surface, the other surface is referred to as the second surface, and the four side surfaces adjacent to the first and second surfaces may be referred to as the first side surface, the second side surface, the third side surface, and the fourth side surface.

The unit cell (100) or stacked cell (200) may have a cuboidal shape, with the cross-sections of the positive electrode current collector (111), the solid electrolyte layer (120), and the negative electrode layer (130) having the same area and shape. Further, in the portion where a side surface of the positive electrode active material layer (112) is surrounded by the solid electrolyte layer (120), the area and shape of the cross-section of the positive electrode active material layer (112) plus the cross-section of the solid electrolyte layer (120) may be the same as the area and shape of the positive electrode current collector (111) (FIGs. 3a and 3b).

Because the unit cell (100) has a cuboidal shape and is structurally stable, the unit cell (100) is easier to align during fabrication of the unit cell (100) and avoids phenomena such as cracking, stretching, or cell shortening when the components are stacked and then pressurized as described above (FIG. 3c).

In one example of the present disclosure, the positive electrode layer includes a positive electrode current collector and a positive electrode active material layer formed on one surface of the positive electrode current collector.

The positive electrode current collector supports the positive electrode active material layer and serves to transfer electrons between the outer wire and the positive electrode active material layer.

Furthermore, the positive electrode current collector is not particularly limited as long as it has a high electronic conductivity without causing chemical changes in the all-solid-state battery. For example, copper, stainless steel, aluminum, nickel, titanium, palladium, calcined carbon, copper or stainless steel whose surface is treated with carbon, nickel, or silver, aluminum-cadmium alloy, and the like may be used as the positive electrode current collector.

Furthermore, the positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

The positive electrode active material layer may be smaller in area than the positive electrode current collector and positioned on the positive electrode current collector.

The positive electrode active material layer includes a positive electrode active material, a solid electrolyte, a conductive material, and a binder.

Furthermore, the positive electrode active material may be any material capable of reversibly adsorbing and releasing lithium ions, without being particularly limited thereto, for example, a layered compound such as lithium cobalt oxide (LiCoO₂), lithium nickel oxide (LiNiO₂), Li[NiₓCo_{y}Mn_{z}Mᵥ]O₂ (wherein M is any one or two or more elements selected from the group consisting of Al, Ga and In; and 0.3≤x<1.0, 0≤y, z≤0.5, 0≤v≤0.1, and x+y+z+v=1), Li(LiₐM_{b-a-b'}M'_{b'})O_{2-c}A_{c} (wherein 0≤a≤0.2, 0.6≤b≤1, 0≤b'≤0.2, and 0≤c≤0.2; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula Li_{1+y}Mn_{2-y}O₄ (wherein y is 0 to 0.33), LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇ ; a Ni site-type lithium nickel oxide represented by formula LiNi_{1-y}MyO₂ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or Li₂Mn₃MO₈ (wherein M is Fe, Co, Ni, Cu, or Zn); LiMn₂O₄, in which a portion of the Li in the formula is substituted by an alkaline earth metal ion; a disulfide compound; Fe₂(MoO₄)₃; and the like, but not limited thereto.

Further, the positive electrode active material may be included in an amount of 60 to 80% by weight based on the total weight of the positive electrode active material layer. Specifically, the content of the positive electrode active material may be 60% by weight, 65% by weight or more, or 68% by weight or more, 72% by weight or less, 75% by weight or less, or 80% by weight or less. If the content of the positive electrode active material is less than 60% by weight, the battery performance may be reduced, and if the content is greater than 80% by weight, the mass transfer resistance may be increased.

Furthermore, the solid electrolyte may have an argyrodite structure, and more specifically, may include a sulfide-based solid electrolyte, a halide-based solid electrolyte, or an oxide-based solid electrolyte.

The sulfide-based solid electrolyte may comprise a compound represented by Formula 1 below, or a mixture thereof:

<Formula 1> LiₐM_{b}S_{c}X_{d}

wherein M is selected from P, Sn, Sb, As, and Ge;
wherein X is selected from CI, Br, and I,
5 ≤ a ≤ 7.5, 0.5 < b ≤ 1.5, 4 < c ≤ 6, and 0.5 < d ≤ 2.

The halide-based solid electrolyte may be represented by Formula 2 below:

<Formula 2> Li₆₋₃ₐMₐBr_{b}Cl_{c}

wherein M is a metal other than Li, 0<a<2, 0≤b≤6, 0≤c≤6, and b+c=6.

For example, the halide-based solid electrolyte may comprise at least one selected from the group consisting of Li₃YBr₆, Li₃YCl₆ and Li₃YBr₂Cl₄.

The oxide-based solid electrolyte can be suitably selected from the group consisting of, but not limited to, LLT-based compounds with perovskite structure, such as Li3xLa2/3-xTiO3, LISICON such as Li14Zn(GeO4)4, LATP-based compounds such as Li1.3Al0.3Ti1.7(PO4)3, LAGP-based compounds such as (Li1+xGe2-xAlx(PO4)3), phosphate-based compounds such as LiPON, and the like.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskers, such as zinc oxide, potassium titanate, etc.; conductive oxides, such as titanium oxide; and conductive polymers, such as polyphenylene derivatives; can be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the positive electrode active material layer, and more specifically, the content of the conductive material may be 1% by weight or more, 1.5% by weight or more, 2% by weight or more, and may be 4% by weight or less, 4.5% by weight or less, or 5% by weight or less. If the content of the conductive material is too small, such as less than 1% by weight, it is difficult to expect the effect of improving the electrical conductivity or the electrochemical properties of the battery may be degraded, and if it is too large, such as more than 5% by weight, the amount of positive electrode active material may be relatively small, resulting in a decrease in capacity and energy density. The method of incorporating the conductive material into the positive electrode is not substantially limited, and any conventional method known in the art can be used, such as mixing with or coating the positive electrode active material.

The binder is a component that assists in the bonding of the positive electrode active material and the conductive material or the bonding to a current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the positive electrode active material layer, and more specifically, the content of the binder may be 0.5% by weight or more, 1% by weight or more, 1.5% by weight or more, 3% by weight or less, 3.5% by weight or less, or 4% by weight or less. If the binder content is less than 0.5% by weight, the adhesion of the positive electrode active material to the positive electrode current collector may be reduced, and if the binder content is greater than 4% by weight, the adhesion may be improved, but the content of the positive electrode active material may be reduced, resulting in a lower cell capacity.

In one example of the present disclosure, the solid electrolyte layer may be 1.3 to 1.8 times larger relative to the area of the positive electrode active material layer. Here, the area of the solid electrolyte layer and the area of the positive electrode active material layer means the area when the solid electrolyte layer and the positive electrode active material layer are viewed from the top.

The solid electrolyte layer is formed in a form that wraps around one surface of the positive electrode active material layer and the adjacent side surfaces to the that surface, so that the area of the solid electrolyte layer is larger than the area of the positive electrode active material layer. If the area of the solid electrolyte layer is less than 1.3 times compared to the area of the positive electrode active material, a step difference may occur between the solid electrolyte layer and the positive electrode current collector or negative electrode layer; if it is more than 1.8 times, the lithium ion migration path may be longer or the production cost may increase.

Further, the solid electrolyte layer may comprise a sulfide-based solid electrolyte, a halide-based solid electrolyte, or an oxide-based solid electrolyte. In terms of lithium ion conductivity, the solid electrolyte layer may comprise a sulfide-based solid electrolyte.

The sulfide-based solid electrolyte may comprise a compound represented by Formula 1 below, or a mixture thereof:

<Formula 1> LiₐM_{b}S_{c}X_{d}

wherein M is selected from P, Sn, Sb, As, and Ge;
wherein X is selected from Cl, Br and I,
5 ≤ a ≤ 7.5, 0.5 < b ≤ 1.5, 4 < c ≤ 6, and 0.5 < d ≤ 2.

The halide-based solid electrolyte may be represented by Formula 2 below:

<Formula 2> Li₆₋₃ₐMₐBr_{b}Cl_{c}

wherein M is a metal other than Li, 0<a<2, 0≤b≤6, 0≤c≤6, and b+c=6.

For example, the halide-based solid electrolyte may comprise at least one selected from the group consisting of Li₃YBr₆, Li₃YCl₆ and Li₃YBr₂Cl₄.

The oxide-based solid electrolyte can be suitably selected from the group consisting of, but not limited to, LLT-based compounds with perovskite structure, such as Li3xLa2/3-xTiO3, LISICON such as Li14Zn(GeO4)4, LATP-based compounds such as Li1.3Al0.3Ti1.7(PO4)3, LAGP-based compounds such as (Li1+xGe2-xAlx(PO4)3), phosphate-based compounds such as LiPON, and the like.

In one example of the present disclosure, the negative electrode layer comprises a negative electrode current collector; and a negative electrode active material layer formed on the negative electrode current collector, wherein the negative electrode active material layer may be laminated to contact the solid electrolyte layer.

Alternatively, the negative electrode layer may comprise: a negative electrode current collector; and an anodeless coating layer formed on the negative electrode current collector, wherein the anodeless coating layer is laminated to contact the solid electrolyte layer.

The negative electrode active material layer includes a negative electrode active material, a binder, and a conductive material.

The negative electrode active material may comprise a material capable of reversibly intercalating or deintercalating lithium (Li+), a material capable of reacting with lithium ions to reversibly form a lithium-containing compound, a lithium metal, or a lithium alloy.

The material into which the lithium ions (Li+) can be reversibly intercalated or deintercalated can be, for example, crystalline carbon, amorphous carbon, or a mixture thereof. The material capable of reacting with the lithium ions (Li+) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active material layer and the dry negative electrode active material layer may be insufficient, and if the content is greater than 80% by weight, the mass transfer resistance may be greater.

The binder is a component that assists in the bonding of the negative electrode active material and the conductive material or the bonding to a negative electrode current collector,
and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the negative electrode active material layer, and more specifically, the content of the binder may be 0.5% by weight or more, 1% by weight or more, 1.5% by weight or more, 3% by weight or less, 3.5% by weight or less, or 4% by weight or less. If the binder content is less than 0.5% by weight, the adhesion of the positive electrode active material to the negative electrode current collector may be reduced, and if the binder content is greater than 4% by weight, the adhesion may be improved, but the content of the negative electrode active material may be reduced, resulting in a lower cell capacity.

Furthermore, the above conductive material is not particularly limited as long as it prevents side reactions in the internal environment of the all-solid-state battery and has excellent electronic conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; Carbon-based materials having a crystal structure of graphene or graphite; conductive fibers, such as carbon fibers and metal fibers; carbon fluoride; metal powders, such as aluminum powder and nickel powder; conductive whiskers, such as zinc oxide and potassium titanate; conductive oxides, such as titanium oxide; and conductive polymers, such as polyphenylene derivatives; may be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the negative electrode active material layer, and more specifically, the content of the conductive material may be 1% by weight or more, 1.5% by weight or more, 2% by weight or more, and may be 4% by weight or less, 4.5% by weight or less, or 5% by weight or less. If the content of the conductive material is too small, such as less than 1% by weight, it is difficult to expect the effect of improving the electrical conductivity or the electrochemical properties of the battery may be degraded, and if it is too large, such as more than 5% by weight, the amount of negative electrode active material may be relatively small, resulting in a decrease in capacity and energy density. The method of incorporating the conductive material into the negative electrode is not substantially limited, and any conventional method known in the art can be used, such as mixing with or coating the negative electrode active material.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the present disclosure also includes a case in which a metallic lithium thin film is formed on a metal plate by initial charging after the battery is assembled without a lithium thin film on the negative electrode current collector.

Further, the anodeless coating layer does not include a negative electrode active material, and a negative electrode active material may be formed in the anodeless coating layer by charging. For example, when a battery is charged, lithium ions may be displaced from the positive electrode, causing lithium metal to precipitate from the negative electrode. In other words, the anodeless coating layer may be a film that induces lithium precipitation.

The anodeless coating layer may comprise metal particles and carbon material particles, and more specifically, may comprise a carbon material-metal composite.

The carbon material particles may be, for example, amorphous carbon material particles. However, carbon material particles are not limited to amorphous particles. Specific examples of amorphous carbon materials may include carbon black, such as acetylene black, furnace black, and ketjen black, graphene, or combinations thereof.

Further, the metal particles may form an alloy with lithium, and the metal particles may be one or more particles selected from silver (Ag), gold, platinum, palladium, silicon, aluminum, bismuth, tin, indium, and zinc. The anodeless coating layer may be formed as a very thin film with a micro-thickness, for example, a thickness of 10 µm or less.

Preferably, the anodeless coating layer may comprise an Ag-C composite as a carbon material-metal composite, and upon first charging, lithium may precipitate between the negative electrode current collector and the coating layer comprising the Ag-C composite.

In one example of the present disclosure, the unit cell may be two or more stacked to produce a stacked cell.

Since the unit cell has a cuboidal shape, even if two or more unit cells are stacked, they still have a cuboidal shape, and the stacked cell can have structural stability.

In one example of the present disclosure, the all-solid-state battery may be a pouch-type all-solid-state battery.

### Method for Producing All-solid-state battery

The present disclosure also relates to a method of manufacturing an all-solid-state battery.

A method of manufacturing an all-solid-state battery according to the present disclosure comprises a unit cell manufacturing process comprising steps (S1) to (S4) below:
(S1) forming a specific area of a positive electrode active material layer on the positive electrode current collector;
(S2) forming, on the positive electrode active material layer, a solid electrolyte layer to surround one surface of the positive electrode active material layer and the adjacent side surfaces;
(S3) forming a negative electrode layer on the solid electrolyte layer, the area of which is equal to the area of the solid electrolyte layer; and
(S4) pressurizing and bonding the positive electrode current collector, positive electrode active material layer, solid electrolyte layer, and negative electrode layer in a stacked direction.

Hereinafter, a method of manufacturing an all-solid-state battery according to the present disclosure will be described in more detail by each step.

In one example of the present disclosure, in step (S1), a specific area of a positive electrode active material layer may be formed on the positive electrode current collector.

The area of the positive electrode current collector may be larger than the area of the positive electrode active material layer. The area of the positive electrode current collector may be 1.3 to 1.8 times larger than the area of the positive electrode active material layer. The area of the positive electrode current collector may be the same as the area of the solid electrolyte layer, which may be advantageous for fabricating unit cells with a cuboidal shape.

The positive electrode active material layer may be prepared by applying and drying a composition for forming a positive electrode active material layer prepared by mixing a positive electrode active material, a solid electrolyte, a conductive material, and a binder in an organic solvent to the positive electrode current collector, and optionally compression molding the positive electrode current collector to improve the electrode density. In this case, it is preferable to use an organic solvent that can uniformly disperse a positive electrode active material, a solid electrolyte, a binder and a conductive material, and is easily evaporated. Specifically, the examples include acetonitrile, methanol, ethanol, xylene, toluene, hexane, tetrahydrofuran, water, and isopropyl alcohol.

In one example of the present disclosure, in step (S2), a solid electrolyte layer may be formed on the positive electrode active material layer to surround one surface of the positive electrode active material layer and the adjacent side surfaces. In the positive electrode active material layer, one surface that contacts the positive electrode current collector is referred to as the first surface, the other surface is referred to as the second surface, and the four side surfaces adjacent to the first and second surfaces may be referred to as the first side surface, the second side surface, the third side surface, and the fourth side surface.

The solid electrolyte layer is formed on the positive electrode active material layer, surrounding the second surface and the first to fourth side surfaces of the positive electrode active material layer. Furthermore, since the area of the positive electrode current collector is larger than the area of the positive electrode active material layer, a solid electrolyte layer is formed on even the positive electrode current collector which is not in contact with the positive electrode active material layer.

The solid electrolyte layer may be prepared by applying a slurry obtained by mixing a solid electrolyte and a binder in a solvent onto the positive electrode active material layer, followed by drying.

The solid electrolyte may comprise at least one selected from the group consisting of a sulfide-based solid electrolyte, a halide-based solid electrolyte, and an oxide-based solid electrolyte, as previously described.

Further, the binder may comprise at least one selected from the group consisting of an acrylic-based copolymer, an acrylic-based block copolymer, an acrylic-based monomer, a random copolymer of oligomers, a styrene-butadiene rubber, an acrylated styrene-butadiene rubber, an acrylonitrile copolymer, an acrylonitrile-butadiene rubber, a nitrile butadiene rubber, an acrylonitrile-styrene-butadiene copolymer, an acrylic rubber, a butyl rubber, a fluorine rubber, polytetrafluoroethylene, polyethylene, polypropylene, and an ethylene/propylene copolymer.

Further, the binder may comprise 5 to 15 parts by weight per 100 parts by weight of the solid electrolyte. Specifically, the content of the binder may be 5 parts or more by weight, 7 parts or more by weight, or 9 parts or more by weight, or 11 parts or less by weight, 13 parts or less by weight, or 15 parts or less by weight. If the content of the binder is less than 5 parts by weight, it may be difficult to form a solid electrolyte layer, and if it is more than 15 parts by weight, the ionic conductivity may decrease.

Furthermore, the solvent is not particularly limited as long as it is a solvent capable of dissolving and/or dispersing the solid electrolyte and/or binder to form a slurry. For example, the solvent may be at least one selected from the group consisting of dimethylsulfoxide (DMSO), isopropyl alcohol, ethyl butyrate, heptyl butyrate, hexyl butyrate, butyl butyrate, isopropyl butyrate, isobutyl isobutyrate, N-methylpyrrolidone (NMP), acetone, xylene, N,N-Dimethylmethanamide (DMF), benzene, tetrahydrofuran (THF), and water. The amount of solvent used can be adjusted by considering the thickness of the coating layer, the properties of the solid electrolyte prepared, etc.

The application method may be a bar coating, roll coating, spin coating, slit coating, die coating, blade coating, comma coating, slot die coating, lip coating, or solution casting, but is not limited thereto, as long as the application is capable of forming a layer.

The drying is not particularly limited as long as the drying method can evaporate the solvent after application to form a layer. For example, the drying may be performed at 300°C or less. Specifically, the drying temperature may be 300°C or less, 200°C or less, 150°C or less, or 100°C or less.

In one example of the present disclosure, in step (S3), a negative electrode layer having an area equal to the solid electrolyte layer may be formed by stacking on the solid electrolyte layer.

In one example of the present disclosure, in step (S4), the positive electrode current collector, the positive electrode active material layer, the solid electrolyte layer, and the negative electrode layer may be joined by applying pressure in the direction in which they are stacked.

The pressure may be 300 to 700 MPa, specifically, 300 MPa or more, 350 MPa or more, 400 MPa or more, and 500 MPa or less, 550 MPa or less, 600 MPa or less, 650 MPa or less, or 700 MPa. If the pressure is below 300 MPa, the internal adhesion of the all-solid-state battery may be poor, and if it is above 700 MPa, the positive electrode and electrolyte may crack in the case of a miss-alignment.

According to a preferred example of the present disclosure, FIGs. 4a to 4d are schematic diagrams of a unit cell fabrication process (4a: placement of positive electrodes, 4b: fabrication of a solid electrolyte layer, 4c: top and longitudinal views of the fabricated solid electrolyte layer, 4d: cutting of the laminate including positive electrode layer and solid electrolyte layer). Following the above manufacturing process, unit cells can be manufactured as follows.

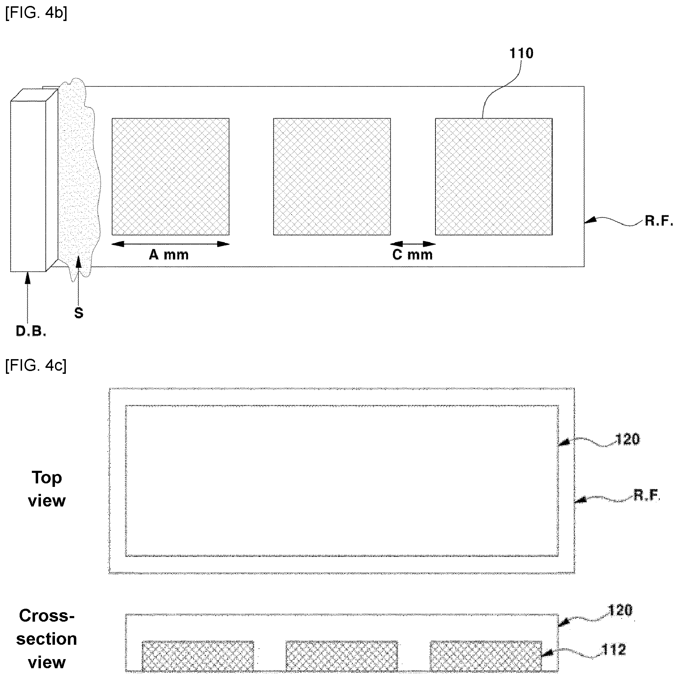

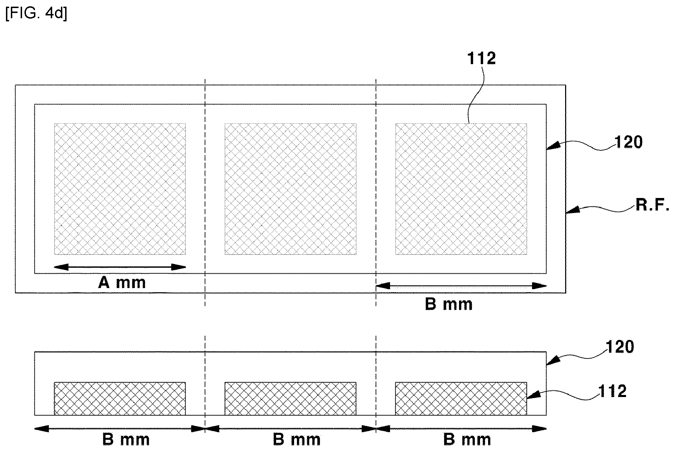

A plurality of punched positive electrodes (110) are arranged on a PET release film (R.F.) (FIG. 4a). Then, a slurry for forming a solid electrolyte (S) is coated with a doctor blade (D.B.) (FIG. 4b) and dried to form a solid electrolyte layer (120) (FIG. 4c). The laminate of the positive electrode layer and the solid electrolyte layer is cut into individual positive electrode layer units (FIG. 4d). The solid electrolyte layer area is formed to be larger than the area of the positive electrode active material layer included in the positive electrode layer. The slurry for forming a solid electrolyte is prepared by mixing Li₆PS₅Cl, a sulfide-based solid electrolyte particle with an argyrodite structure, a rubber-based binder, and a butyrate-based solvent. At this time, the area of the positive electrode active material layer was set as A² mm², the area of the solid electrolyte layer was set as B² mm², and the spacing between the positive electrodes was set as C mm when the positive electrodes were placed, and the process was carried out so that C < A < B and C = (B-A).

Then, a negative electrode layer is stacked on top of the solid electrolyte layer and pressurized to 400 MPa pressure to prepare the unit cell. In the unit cell, the area of the positive electrode current collector contained in the positive electrode, the combined area of the positive electrode active material layer and the solid electrolyte layer surrounding it, the area of the solid electrolyte layer, and the area of the negative electrode layer are the same.

A stacked cell can be made by stacking two of the above unit cells.

Although the present disclosure has been described above by way of limited examples and drawings, the invention is not limited thereby, and various modifications and variations may be made by those having ordinary skill in the art, within the technical idea of the invention and the equivalent scope of the patent claims set forth below.

### [Reference Numerals]

10: All-solid-state battery
100: Unit cell
110: Positive electrode layer
111: Positive electrode current collector, 112: Positive electrode active material layer
120: Solid electrolyte layer
130: Negative electrode layer
131: Negative electrode current collector, 132: Negative electrode active material layer
200: Stacked cell
C: Crack, D: Disintegration
R.F.:Release film, S: Slurry, D.B.: Dr. Blade

## Claims

1. An all-solid-state battery comprising a unit cell,
wherein the unit cell comprises a positive electrode current collector;
a positive electrode active material layer contacting a specific area on one surface of the positive electrode current collector;
a solid electrolyte layer surrounding one surface of the positive electrode active material layer and the adjacent side surfaces, and formed to contact the positive electrode current collector; and
a negative electrode layer located on the solid electrolyte layer and having an area equal to the solid electrolyte layer.

2. The all-solid-state battery according to claim 1,
wherein the area of the solid electrolyte layer is 1.3 to 1.8 times larger than the area of the positive electrode active material layer.

3. The all-solid-state battery according to claim 1,
wherein the negative electrode layer comprises: a negative electrode current collector; and a negative electrode active material layer formed on the negative electrode current collector,
wherein the negative electrode active material layer is laminated to abut the solid electrolyte layer.

4. The all-solid-state battery according to claim 1,
wherein the negative electrode layer comprises a negative electrode current collector; and an anodeless coating layer formed on the negative electrode current collector,
wherein the anodeless coating layer is laminated to abut the solid electrolyte layer.

5. The all-solid-state battery according to claim 1,
wherein two or more unit cells are stacked.

6. The all-solid-state battery according to claim 1,
wherein the all-solid-state battery is a pouch-type.

7. A method of manufacturing an all-solid-state battery, comprising the steps of (S1) forming a specific area of a positive electrode active material layer on the positive electrode current collector;
(S2) forming, on the positive electrode active material layer, a solid electrolyte layer to surround one surface of the positive electrode active material layer and the adjacent side surfaces;
(S3) forming a negative electrode layer on the solid electrolyte layer, the area of which is equal to the area of the solid electrolyte layer; and
(S4) pressurizing and bonding the positive electrode current collector, positive electrode active material layer, solid electrolyte layer, and negative electrode layer in a stacked direction.

8. The method of manufacturing an all-solid-state battery according to claim 7,
wherein the pressure is 300 Mpa to 700 Mpa.
